# EUROPÄISCHE PATENTSCHRIFT

(11) **EP 2 926 331 B1**
(45) Veröffentlichungstag und Bekanntmachung des Hinweises auf die Patenterteilung: **22.08.2018**
(21) Anmeldenummer: 12794205.0
(22) Anmeldetag: 28.11.2012
(51) Int. Cl.: G09B 23/06, G09B 19/00

(54) **AUTOMATISIERUNGSGERÄT, VERFAHREN ZUM VIRTUELLEN FUNKTIONALEN VERKNÜPFEN VON EXTERNEN KOMPONENTEN UND COMPUTERPROGRAMMPRODUKT**
AUTOMATION DEVICE, METHOD FOR VIRTUAL FUNCTIONAL LINKING OF EXTERNAL COMPONENTS AND COMPUTER PROGRAM PRODUCT
APPAREIL D'AUTOMATISATION, PROCÉDÉS POUR LA COMBINAISON FONCTIONNELLE VIRTUELLE DE COMPOSANTS EXTERNES ET PRODUIT PROGRAMME D'ORDINATEUR

(43) Veröffentlichungstag der Anmeldung: 07.10.2015
(73) Patentinhaber: Festo Didactic SE, 73770 Denkendorf (DE)
(72) Erfinder: BLEYER, Jürgen, 73092 Heiningen (DE)
(74) Vertreter: Patentanwälte Magenbauer & Kollegen Partnerschaft mbB
(86) Internationale Anmeldenummer: PCT/EP2012/004903
(87) Internationale Veröffentlichungsnummer: WO 2014/082647

(56) Entgegenhaltungen:
- DE-A1-102008 051 401
- DE-U1-202012 001 359
- Anonymous: "Award Winners 2012", , 28. September 2012 (2012-09-28), Seiten 1-4, XP055074017, Gefunden im Internet: URL:http://web.archive.org/web/20120928235 520/http://www.worlddidac.org/mc/Services/ Award-2012/Award-Winners-2012.aspx [gefunden am 2013-08-02]
- Anonymous: "LD Dicdactic", , 23. Oktober 2012 (2012-10-23), Seiten 1-1, XP055074036, Gefunden im Internet: URL:http://web.archive.org/web/20121023055 016/http://www.ld-didactic.de/ [gefunden am 2013-08-02]
- Anonymous: "Labquest(r) 2", , 31. März 2012 (2012-03-31), Seiten 1-1, XP055074122, Gefunden im Internet: URL:http://www.vernier-in-der-schule.de/do kumentation/labquest-2 [gefunden am 2013-08-05]

## Beschreibung

Die Erfindung betrifft ein Automatisierungsgerät mit einem Computer, der eine Recheneinheit, ein Computergehäuse, eine Datenschnittstelle und einen Bildschirm umfasst, wobei die Recheneinheit, die Datenschnittstelle und der Bildschirm im Computergehäuse aufgenommen sind. Ein solches Automatisierungsgerät kann beispielsweise für Ausbildungszwecke, insbesondere in der gewerblichen Ausbildung eingesetzt werden, um den Lernenden den Umgang mit Komponenten der Automatisierungstechnik wie Aktoren, Sensoren, Steuergeräten, Reglern und weiteren Automatisierungseinrichtungen nahezubringen oder zum Betrieb eines automatisierungstechnischen Systems in einer Produktions- und/oder Fertigungseinrichtung eingesetzt werden. Ferner betrifft die Erfindung ein Verfahren zur Verwendung eines Automatisierungsgeräts sowie ein Computerprogrammprodukt.

Aus der DE 10 2008 051 401 A1 ist ein Trainings- und Simulationsgerät für elektrische Funktionsabläufe in elektrischen, elektromechanischen und elektrofluidischen Anlagen bekannt, bei dem ein Controller zur Simulation und visuellen Wiedergabe von Anlagekomponenten auf einem Display mit neben dem Display angeordneten elektrischen Anschlüssen zur Kabelverbindung mit Hardware-Komponenten der Anlage vorgesehen ist, wobei jeweils wenigstens einem Teil der Anschlüsse optische Eingänge und/oder Ausgänge der jeweils simulierten Anlagekomponenten auf dem Display zugeordnet sind und wobei der Controller Mittel aufweist zur Erzeugung von entsprechenden elektrischen Spannungen an den Anschlüssen von zugeordneten Ausgängen der simulierten Anlagekomponenten und/oder zur Erzeugung von Reaktionen der simulierten Anlagekomponenten in Abhängigkeit von extern angelegten Spannungen an Anschlüsse, die Eingängen der simulierten Anlagekomponenten zugeordnet sind.

Aus der DE 20 2012 001359 U1 ist eine Verbindungsvorrichtung zum Verbinden eines Lehrmittelsensors mit mindestens einem Personalcomputer bekannt, wobei die Verbindungsvorrichtung mit einer USB-Schnittstelle und mit einer Funkschnittstelle versehen ist, von denen zur Verbindung mit dem genau einen Personalcomputer wahlweise die eine oder die andere verwendbar ist, wobei die Verbindungsvorrichtung ferner einen Anschluss für den Sensor aufweist.

Die Aufgabe der Erfindung besteht darin, ein Automatisierungsgerät, ein Verfahren zur Verwendung eines Automatisierungsgeräts sowie ein Computerprogramm bereitzustellen, die in einfacher Weise an unterschiedliche Trainingsaufgaben angepasst werden können.

Diese Aufgabe wird gemäß einem ersten Aspekt für ein Automatisierungsgerät der eingangs genannten Art mit den Merkmalen des Anspruchs 1 gelöst. Hierbei ist ein Arbeitsmodul vorgesehen, das ein Modulgehäuse umfasst, an dem eine Anschlusseinrichtung für eine elektrische und/oder fluidische Kopplung mit einer externen Komponente ausgebildet ist und in dem eine Verarbeitungseinheit zur Verarbeitung von elektrischen Signalen des Computers oder zur Verarbeitung von elektrischen Signalen des Computers und der externen Komponente aufgenommen ist, wobei das Arbeitsmodul für eine Anordnung an einer zum Bildschirm benachbarten Arbeitsposition ausgebildet ist und für eine Signalkommunikation mit der Recheneinheit über einen drahtlosen und/oder drahtgebundenen Signalpfad eingerichtet ist, der über die Datenschnittstelle verläuft, wobei in den Signalpfad eine Kommunikationseinheit eingeschleift ist, die für eine unidirektionale oder bidirektionale Umsetzung elektrischer Signale zwischen Arbeitsmodul und Computer ausgebildet ist und die Steckbuchsen für eine Anordnung der Arbeitsmodule an der Arbeitsposition gegenüber dem Computer aufweist, wobei die Recheneinheit dazu eingerichtet ist, auf einem benachbart zur Arbeitsposition des Arbeitsmoduls angeordneten Bildschirmbereich eine dem Arbeitsmodul zugeordnete graphische Darstellung bereitzustellen, wobei in den Signalpfad eine Kommunikationseinheit eingeschleift ist, die für eine unidirektionale oder bidirektionale Umsetzung elektrischer Signale zwischen Arbeitsmodul und Computer ausgebildet ist.

Das Arbeitsmodul ist zur Kopplung einer oder mehrerer externer Komponenten mit dem Computer ausgebildet und weist zu diesem Zweck eine Verarbeitungseinrichtung auf, die auf die jeweils anzuschließende Komponente bzw. die anzuschließenden Komponenten angepasst ist, um Signale der Komponenten verarbeiten zu können und/oder um die für die Funktion der Komponenten notwendige Signale und/oder Fluidströme bereitstellen zu können. Das Arbeitsmodul ist geometrisch so gestaltet, dass es in einer zum Bildschirm benachbarten Arbeitsposition am Computer angeordnet werden kann. Hierdurch wird eine kompakte Anordnung des wenigstens einen Arbeitsmoduls am Computer sichergestellt. Eine Signalkommunikation zwischen dem Arbeitsmodul und der Recheneinheit des Computers findet über die wenigstens eine Datenschnittstelle des Computers statt, diese kann für eine drahtgebundene oder eine drahtlose Kommunikation mit dem wenigstens einen Arbeitsmodul ausgebildet sein. Vorzugsweise ist eine bidirektionale Kommunikation zwischen dem Computer und dem Arbeitsmodul vorgesehen, so dass am Arbeitsmodul eintreffende Signale der externen Komponenten über den Signalpfad an die Recheneinheit im Computer zur Verfügung gestellt werden können und von der Recheneinheit durch entsprechende Signale an die Verarbeitungseinrichtung auch Einfluss auf das Verhalten der externen Komponente genommen werden kann. Alternativ kann zwischen einem Arbeitsmodul und dem Computer auch eine unidirektionale Kommunikation vorgesehen sein. Beispielsweise kann eine unidirektionale Kommunikation von einer als Sensor ausgebildeten externen Komponente über das Arbeitsmodul zum Computer vorgesehen sein. Ebenso kann eine unidirektionale Kommunikation vom Computer über das Arbeitsmodul an einen Aktor vorgesehen sein. Der Aktor kann zusätzlich mit einem Sensor versehen sein, der über ein weiteres Arbeitsmodul in Kommunikation mit dem Computer steht.

Erfindungsgemäß ist die Recheneinheit dazu eingerichtet, auf einem benachbart zur Arbeitsposition des Arbeitsmoduls angeordneten Bildschirmbereich eine dem Arbeitsmodul zugeordnete graphische Darstellung bereitzustellen. Ergänzend kann vorgesehen sein, dass die Recheneinheit dazu eingerichtet ist, anhand der dem Arbeitsmodul zugeordneten graphischen Darstellung auf dem Bildschirm eine elektrische und/oder fluidische Funktion des Arbeitsmoduls zu symbolisieren. Die graphische Darstellung des Arbeitsmoduls auf dem benachbart zum Arbeitsmodul angeordneten Bildschirmbereich des Computers dient dazu, eine Funktion und/oder einen Funktionszustand des jeweiligen Arbeitsmoduls zu visualisieren. Hierdurch wird dem Benutzer in gut verständlicher Weise dargelegt, welche Möglichkeiten das jeweilige Arbeitsmodul und die daran angeschlossene externe Komponenten für eine Nutzung in einem Automatisierungssystem bieten und/oder in welchem Zustand sich das Arbeitsmodul und/oder die externe Komponente befinden. Ferner kann vorgesehen werden, dass in dem Bildschirmbereich durch Anwahl der graphischen Darstellung durch den Benutzer beispielsweise eine Hilfefunktion und/oder eine Parametrierfunktion und/oder andere Funktionen für das Arbeitsmodul und/oder die angeschlossene externe Komponente aufgerufen werden können, um beispielsweise ein Ansteuerverhalten für die externe Komponente zu beeinflussen. Dem Arbeitsmodul können unterschiedliche Funktionen zugeordnet werden, die auf dem jeweiligen Bildschirmbereich des Computers dargestellt werden und die die Basis für die Verarbeitung der am Arbeitsmodul anliegenden Signale der externen Komponenten bilden. Beispielsweise kann vorgesehen sein, dass der Benutzer vor dem Anschluss von externen Komponenten an das Arbeitsmodul zunächst aus einer Funktionsbibliothek für das Arbeitsmodul die gewünschte Funktionalität auswählt und dem Arbeitsmodul zuordnet, damit anschließend auch die gewünschte Verarbeitung der Signale der externen Komponenten im Arbeitsmodul und im Computer gewährleistet ist.

In weiterer Ausgestaltung der Erfindung ist vorgesehen, dass die Recheneinheit dazu eingerichtet ist, in der dem Arbeitsmodul zugeordneten graphischen Darstellung auf dem Bildschirm eine Information bereitzustellen, die von elektrischen Signalen des Computers und/oder der externen Komponente am Arbeitsmodul abhängt. Hierdurch kann in einfacher Weise ein von der externen Komponente bereitgestellter Messwert und/oder ein vom Computer an die externe Komponente bereitgestelltes Signal, beispielsweise ein Stellsignal für ein Ventil, visualisiert werden. Es kann somit auch ein Zustand der externen Komponente, beispielsweise ein Schaltzustand eines Fluidventils oder eine Bewegungsstellung eines Aktors auf dem Bildschirm dargestellt werden. Hierzu wird im Computer ein von der externen Komponente über das Arbeitsmodul bereitgestelltes elektrisches Signal oder ein vom Rechenwerk des Computers bereitgestelltes elektrisches Signal verarbeitet und im jeweiligen Bildschirmbereich dargestellt.

Vorteilhaft ist es, wenn die Recheneinheit für eine virtuelle elektrische und/oder virtuelle fluidische Verknüpfung mehrerer Arbeitsmodule eingerichtet ist. Dadurch können am Computer komplexe und mit vorgebbaren Abhängigkeiten versehene Vorrichtungen modelliert werden, die sich mittels der Arbeitsmodule und der daran angeschlossenen externen Komponenten konkret betreiben lassen. Beispielsweise kann ein Stellvorgang eines elektrischen Aktors oder ein Schaltvorgang eines Fluidventils hervorgerufen werden. Aufgrund der virtuellen Verknüpfungen zwischen den einzelnen Arbeitsmodulen kann in einfacher Weise ohne die Notwendigkeit einer Veränderung einer Verkabelung und/oder einer fluidischen Verschaltung eine Änderung des Automatisierungssystems erreicht werden, das durch die Trainingseinheit und die daran angeschlossenen externen Komponenten gebildet wird. Hierzu können sowohl virtuelle elektrische Verknüpfungen, beispielsweise zwischen einem Bewegungssensor und einem elektrischen Aktor oder virtuelle fluidische Verknüpfungen, beispielsweise zwischen einem fluidischen Endlagenschalter an einem fluidischen Aktor und einem dem fluidischen Aktor zugeordneten Sperrventil in einfacher Weise verändert werden. Alternativ kann auch vorgesehen werden, dass an eines oder mehrere Arbeitsmodule reale Steuerungskomponenten, beispielsweise Komponenten einer speicherprogrammierbaren Steuerung, angeschlossen werden, die Steuerungssignale an die Arbeitsmodule bereitstellen, die von der Recheneinheit verarbeitet werden und zur Ansteuerung einer virtuellen verfahrenstechnischen Anlage oder eines virtuellen Manipulators, die bzw. der auf dem Bildschirm des Computers dargestellt wird, genutzt werden können. Weiterhin sind auch Mischformen zwischen diesen beiden Anwendungsarten möglich.

Erfindungsgemäß ist in den Signalpfad eine Kommunikationseinheit eingeschleift, die für eine unidirektionale oder bidirektionale Umsetzung elektrischer Signale zwischen Arbeitsmodul und Computer ausgebildet ist. Die Kommunikationseinheit ist dazu vorgesehen, die elektrischen Signale der Arbeitsmodule in ein Datenformat zu überführen, das über die Datenschnittstelle in die Recheneinheit des Computers übertragen werden kann. Somit dient die Kommunikationseinheit zur Aufbereitung der von den Arbeitsmodulen bereitgestellten Signale sowie gegebenenfalls auch zur Bereitstellung von geeigneten Signalen an die Arbeitsmodule. Vorzugsweise umfasst die Kommunikationseinheit einen eigenen Prozessor, auf dem ein Programm ablaufen kann, das die Aufbereitung einer Vielzahl von unterschiedlichen Signalen von unterschiedlichen Arbeitsmodulen und eine geordnete Weiterleitung der Signale in einem vorgebbaren Datenformat ermöglicht. Hierbei kann vorgesehen sein, dass die Kommunikationseinheit eine Vorverarbeitung von Signalen der Arbeitsmodule, beispielsweise eine Analog-Digitalwandlung und/oder eine Pegelwandlung von Signalpegeln vornimmt, um eine vorteilhafte Kommunikation über die Datenschnittstelle des Computers zu gewährleisten. Dies ist insbesondere dann von Bedeutung, wenn es sich bei dem Computer um einen handelsüblichen Computer für Heim- oder Büroanwendungen handelt, der nicht mit speziellen Datenschnittstellen versehen ist, wie sie im Bereich der Automatisierungstechnik eingesetzt werden, beispielsweise mit einer Feldbusschnittstelle. Durch diese Maßnahmen können die Arbeitsmodule einfach und kostengünstig gehalten werden, da die Signalverarbeitung zentral in der Kommunikationseinheit erfolgt. Ferner kann hierdurch ein kostengünstiger Computer verwendet werden.

Bei einer anders gearteten Ausführungsform der Erfindung sind der Computer und die Kommunikationseinheit in einem gemeinsamen Gehäuse untergebracht, beispielsweise handelt es sich bei dem Computer um einen speziell an Ausbildungszwecke und/oder Versuchszwecke angepassten Computer mit integrierter Kommunikationseinheit.

Bevorzugt ist die Kommunikationseinheit für eine mechanische Kopplung, insbesondere mittels einer magnetischen Kopplung und/oder einer mechanischen Steckverbindung, mit dem Arbeitsmodul ausgebildet. Die Kommunikationseinheit gewährleistet somit eine im Wesentlichen vom Computer unabhängige mechanische Anordnung der Arbeitsmodule. Bei Nutzung einer mechanischen Steckverbindung kann in einer Doppelfunktion auch eine elektrische Signalübertragung zwischen Arbeitsmodul und Kommunikationseinheit erzielt werden.

Zweckmäßig ist es, wenn am Arbeitsmodul und an der Kommunikationseinheit zueinander korrespondierende, insbesondere kontaktlose und/oder kontaktgebundene, elektrische Verbindungsmittel ausgebildet sind, die für eine Signalübertragung zwischen Arbeitsmodul und Kommunikationseinheit eingerichtet sind. Die elektrischen Verbindungsmittel dienen zur unidirektionalen oder bidirektionalen Signalübertragung zwischen dem Arbeitsmodul und der Kommunikationseinheit. Die elektrischen Verbindungmittel können insbesondere als Mehrfachsteckverbinder oder als drahtlose Verbindungsmittel, insbesondere gemäß dem Bluetooth- oder IRDA- oder Zigbee-Standard, ausgebildet sein.

In weiterer Ausgestaltung der Erfindung sind der Computer und/oder die Kommunikationseinheit für eine Erkennung des angekoppelten Arbeitsmoduls und für eine Bereitstellung von spezifischen, dem erkannten Arbeitsmodul zugehörigen Daten aus einer internen oder externen Datenbank eingerichtet. Hierdurch wird eine Inbetriebnahme des von dem Automatisierungsgerät und den daran angeschlossenen externen Komponenten gebildeten Automatisierungssystems erleichtert. Vorzugsweise weist das jeweilige Arbeitsmodul einen Informationsspeicher auf, der eine Information über die Funktion des Arbeitsmoduls trägt und der von der Kommunikationseinheit und/oder vom Computer abgefragt und ausgelesen werden kann. Bei dem Informationsspeicher kann es sich beispielsweise um einen RFID-Transponderbaustein (Radio Frequency Identification Baustein) oder um einen Speicher eines möglicherweise ohnehin für die Funktion des Arbeitsmoduls notwendigen Mikroprozessors oder Mikrocontrollers handeln. Je nach Technologie des Informationsspeichers kann dieser drahtgebunden oder drahtlos ausgelesen werden, um dadurch der Kommunikationseinheit und/oder dem Computer die Identifikation des Arbeitsmoduls zu ermöglichen. Die für eine ordnungsgemäße Signalauswertung im Computer sowie zur graphischen Darstellung des Arbeitsmoduls auf dem Bildschirmbereich notwendigen Informationen über das jeweilige Arbeitsmodul können aus einer internen Datenbank, also entweder aus dem Informationsspeicher des Arbeitsmoduls oder aus einem Speicher der Kommunikationseinheit oder des Computers ausgelesen werden. Ergänzend oder alternativ kann vorgesehen sein, dass die Kommunikationseinheit und/oder der Computer drahtgebunden oder drahtlos, insbesondere über ein drahtloses lokales Netzwerk (WLAN), auf eine externe Datenbank, insbesondere eine serverbasierte Datenbank, die über das Internet oder über ein lokales Netzwerk (LAN) abgefragt werden kann, zugreifen und Daten über das Arbeitsmodul aus dieser Datenbank abfragen. Vorzugsweise sind die Kommunikationseinheit und/oder der Computer für einen unterbrechungsfreien Betrieb bei Austausch eines oder mehrerer Arbeitsmodule eingerichtet, weisen also programmtechnische Vorkehrungen auf, die es ermöglichen, eines oder mehrere Arbeitsmodule hinzuzufügen, zu entfernen oder auszutauschen, ohne dass für ein weiteres Funktionieren des Automatisierungsgeräts ein Neustart der Kommunikationseinheit und/oder des Computers erforderlich ist.

Vorzugsweise weist das Arbeitsmodul einen, insbesondere austauschbar ausgebildeten, zungenartigen Fortsatz auf, der bei mechanischer Kopplung des Arbeitsmoduls mit dem Computer, insbesondere mittels der Kommunikationseinheit, einen um den Bildschirm ausgebildeten Randbereich des Computergehäuses überdeckt. Der zungenartige Fortsatz dient dazu, die Beziehung des jeweiligen Arbeitsmoduls zu der graphischen Darstellung auf dem Bildschirmbereich, der dem jeweiligen Arbeitsmodul zugeordnet ist, in einer für den Benutzer gut erfassbaren Weise kenntlich zu machen. Vorzugsweise ist vorgesehen, dass auf derjenigen Außenoberfläche des Arbeitsmoduls, an die der Fortsatz angrenzt und/oder auf dem Fortsatz wenigstens ein graphisches Symbol und/oder eine symbolische Leitung dargestellt sind, die auf dem angrenzenden Bildschirmbereich fortgesetzt werden, um dadurch eine durchgehende Beziehung zwischen der angeschlossenen externen Komponente, dem Arbeitsmodul und der graphischen Darstellung auf dem Bildschirmbereich kenntlich zu machen. Vorzugsweise kann der Fortsatz auf das Arbeitsmodul aufgeclipst werden, um eine Anpassung an unterschiedlich gestaltete Computergehäuse zu ermöglichen.

Bei einer Weiterbildung der Erfindung ist vorgesehen, dass die Verarbeitungseinheit eine elektrische Sensoreinrichtung und/oder eine fluidische Sensoreinrichtung und/oder eine elektrofluidische Stelleinrichtung und/oder eine elektrische Stelleinrichtung und/oder einen Busknoten umfasst. Bei einer Ausgestaltung der Verarbeitungseinheit als elektrische oder fluidische Sensoreinrichtung kann beispielsweise eine Strom- oder Spannungsmessung für elektrischen Strom oder eine Durchflussmessung oder Druckmessung für einen Fluidstrom erfolgen. Eine Ausführungsform der Verarbeitungseinheit als elektrofluidische Stelleinrichtung kann beispielsweise ein Magnetventil, insbesondere ein Schaltventil oder ein Proportionalventil, umfassen. Eine Ausführungsform der Verarbeitungseinheit als elektrische Stelleinrichtung kann beispielsweise eine Motorsteuerung für einen Elektromotor umfassen. Eine als Busknoten ausgebildete Verarbeitungseinheit ermöglicht eine Auskopplung von Bussignalen aus einem Bussystem und/oder eine Einkopplung von Bussignalen in das Bussystem, um dadurch eine Kommunikation zwischen dem Bussystem und dem Automatisierungsgerät mittels des entsprechend ausgebildeten Arbeitsmoduls zu ermöglichen.

Bevorzugt ist die externe Komponente als Sensor oder Aktor oder programmierbare Steuerung ausgebildet. Beispielsweise ist die externe Komponente als Drucksensor, Temperatursensor, Positionssensor, Geschwindigkeitssensor oder als Teil einer speicherprogrammierbaren Steuerung ausgebildet. Bei Ausgestaltung der externen Komponente als Aktor kann dieser beispielsweise als Fluidzylinder, als Fluidmotor, als Piezosteller, als Elektromotor ausgebildet sein. Bei Ausgestaltung der externen Komponente als programmierbare Steuerung, insbesondere als speicherprogrammierbare Steuerung (SPS) können Befehlsabfolgen an das Automatisierungsgerät bereitgestellt werden, die dort an eine virtuelle Anlage, beispielsweise an ein virtuelles pneumatisches Automatisierungssystem oder an einen virtuellen Industrieroboter oder an eine virtuelle Prozessanlage, bereitgestellt werden, so das auf dem Bildschirm des Computers die Auswirkungen der externen Komponente auf die jeweilige virtuelle Anlage dargestellt werden können.

Zweckmäßig ist es, wenn das Computergehäuse mit dem integrierten Bildschirm eine im Wesentlichen kubische Hüllgeometrie aufweist und/oder dass der Bildschirm für eine manuelle Eingabe auf einer Bildschirmoberfläche berührempfindlich ausgebildet ist. Durch eine derartige Hüllgeometrie ist eine kompakte Gestaltung des Automatisierungsgeräts gewährleistet, dies gilt insbesondere dann, wenn die Flächenerstreckung des Computergehäuses in der Darstellungsebene des Bildschirms nur geringfügig größer als der Bildschirm ist und wenn die Dicke des Computergehäuses einem Bruchteil kleiner als 1/10 der längsten Kante des Computergehäuses in der Bildschirmebene entspricht.

Die Aufgabe der Erfindung wird gemäß einem zweiten Aspekt durch ein Verfahren zur Verwendung eines Automatisierungsgeräts nach einem der Ansprüche 1 bis 10 gelöst, das die folgenden Schritte umfasst: Anschließen der externen Komponenten an Arbeitsmodule, die zur Verarbeitung und/oder Bereitstellung von Signalen und/oder zur Beeinflussung von Fluidströmen von den externen Komponenten und/oder an die externen Komponenten ausgebildet sind, Verbinden der Arbeitsmodule mit einem Computer unter Zwischenschaltung einer Kommunikationseinheit, wobei die Arbeitsmodule angrenzend an einem Bildschirm des Computers angeordnet werden, Durchführen einer Erkennung der mit dem Computer verbundenen Arbeitsmodule, Auslesen von Daten für eine graphische Darstellung der Arbeitsmodule auf dem Bildschirm aus einer internen oder externen Datenbank, Darstellen der graphischen Darstellungen der Arbeitsmodule in Bildschirmbereichen, die an die jeweiligen Arbeitsmodule angrenzen, Darstellen von Verknüpfungsmöglichkeiten für Verbindungen zwischen den verbundenen Arbeitsmodulen. Dabei können den Arbeitsmodulen jeweils mehrere graphische Darstellungen und damit verknüpfte Funktionalitäten zur Verarbeitung von Signalen externer Komponenten zugeordnet sein, die vom Benutzer ausgewählt werden können.

In weiterer Ausgestaltung des Verfahrens ist vorgesehen, dass der Computer Signalpfade zwischen Arbeitsmodulen gemäß einer automatisierten oder manuellen Verknüpfungsauswahl erzeugt, so dass ein Signalaustausch zwischen den virtuell funktional verknüpften Arbeitsmodulen mittels des Computers erfolgt, um ein Verhalten der Arbeitsmodule und der daran angeschlossenen externen Komponenten zu erzeugen, das vorzugsweise einer unmittelbaren Kopplung der externen Komponenten entspricht.

Die Aufgabe der Erfindung wird gemäß einem dritten Aspekt durch ein Computerprogrammprodukt zum virtuellen funktionalen Verknüpfen von externen Komponenten gelöst, wobei durch Ausführung des Computerprogrammprodukts von einer Recheneinheit eines Computers das Verfahren gemäß Anspruch 11 oder 12 durchgeführt wird.

Eine vorteilhafte Ausführungsform der Erfindung ist in der Zeichnung dargestellt. Hierbei zeigt:
- Figur 1: eine schematische Explosionsdarstellung von wesentlichen Komponenten eines Automatisierungsgeräts in einer Draufsicht,
- Figur 2: eine Vorderansicht der Komponenten des Automatisierungsgeräts,
- Figur 3: eine schematische Darstellung eines funktionsbereiten Automatisierungssystems, das das Automatisierungsgerät sowie mehrere externe Komponenten umfasst,
- Figur 4: eine Vorderansicht des betriebsbereiten Automatisierungsgeräts und
- Figur 5: eine schematische Darstellung eines exemplarisch als 2/2-Magnetventil ausgebildeten Arbeitsmoduls.

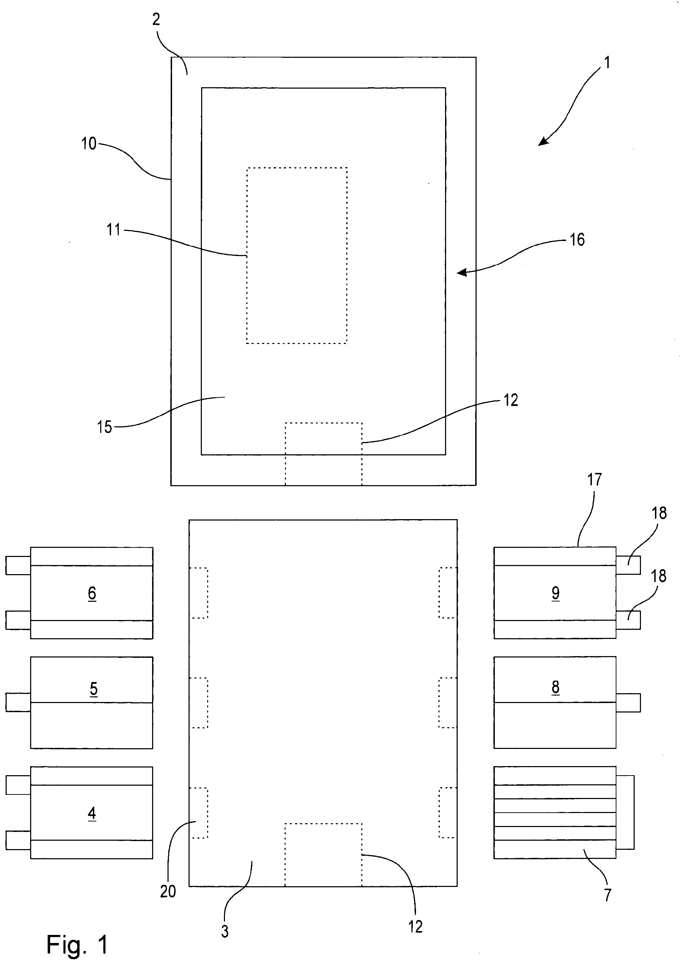

Ein in der Figur 1 in einer Explosionsdarstellung gezeigtes Automatisierungsgerät 1 für Ausbildungszwecke umfasst einen Computer 2, eine Kommunikationseinheit 3 sowie mehrere, teilweise funktional unterschiedlich ausgebildete Arbeitsmodule 4, 5, 6, 7, 8 und 9.

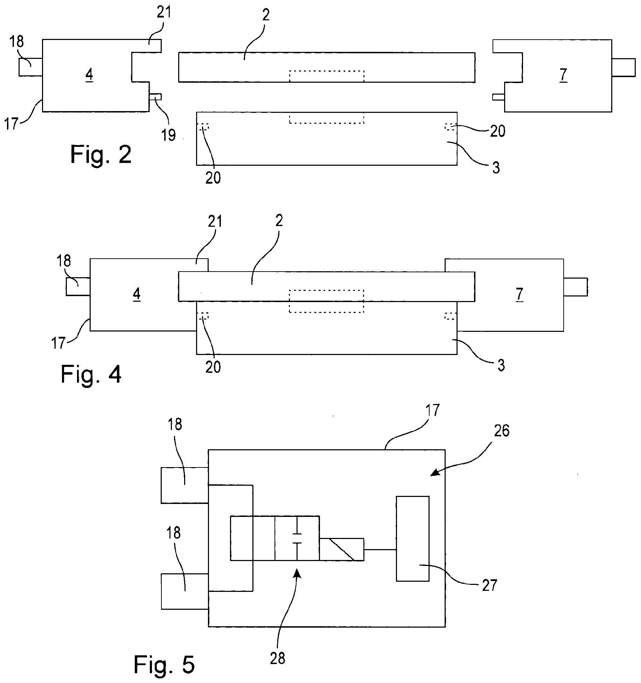

Der Computer 2 ist exemplarisch als Tablet-PC ausgebildet, weist also ein im Wesentlichen von einer kubischen Hüllkurve umgebbares Computergehäuse 10 auf, in dem eine nur schematisch dargestellte Recheneinheit 11, eine ebenfalls nur schematisch dargestellte Datenschnittstelle 12 und ein Bildschirm 15 aufgenommen sind. Dabei ist der Bildschirm 15 derart im Computergehäuse 10 aufgenommen, dass er eine größte Außenoberfläche 16 des Computergehäuses 10 zumindest nahezu vollständig ausfüllt. Dadurch wird zwischen einer Außenkante des Bildschirms 15 und einer Außenkante des Computergehäuses 10 nur ein schmaler Randbereich ausgebildet. Vorzugsweise ist der Bildschirm 15 berührempfindlich ausgebildet, so dass ein Bediener durch manuelles Betätigen der Bildschirmoberfläche Eingaben für den Computer 2 vornehmen kann. Die Recheneinheit 11 ist zur Bereitstellung einer Bildschirmdarstellung und zur Verarbeitung von Signalen, die beispielsweise als Bildschirmeingaben oder über die Datenschnittstelle 12 bereitgestellt werden, eingerichtet. Vorzugsweise wird die Recheneinheit 11 mit eine auswechselbaren Betriebssystem betrieben, in das ein speziell auf den Betrieb des Automatisierungsgeräts abgestimmter Programmcode geladen werden kann. Wie aus den Figuren 1 und 2 hervorgeht, ist die in der Figur 2 erkennbare Dicke des Computergehäuses 10 erheblich kleiner als eine in der Figur 1 erkennbare längste Kante des Computergehäuses 10.

Die dem Automatisierungsgerät 1 zugehörigen Arbeitsmodule 4 bis 9 umfassen jeweils ein exemplarisch im Wesentlichen kubisch ausgeführtes Modulgehäuse 17, an dem eine Anschlusseinrichtung 18 für eine elektrische und/oder fluidische Kopplung mit einer in der Figur 2 nicht dargestellten externen Komponente ausgebildet ist. Ferner ist am Modulgehäuse 17 ein Stecker 19 ausgebildet, der für eine elektromechanische Kopplung mit einer an der Kommunikationseinheit 3 ausgebildeten Steckbuchse 20 dient. Somit kann eine Signalkommunikation zwischen dem jeweiligen Arbeitsmodul 4 bis 9, der Kommunikationseinheit 3 und der Recheneinheit 11 aufgebaut werden, die exemplarisch über einen drahtgebundenen Signalpfad vom jeweiligen Arbeitsmodul 4 bis 9 zur Kommunikationseinheit 3 und von dort exemplarisch über eine drahtlose Verbindung zwischen der Kommunikationseinheit 3 und der Recheneinheit 11 über die Datenschnittstelle 12 verläuft. Exemplarisch ist die Datenschnittstelle 12 als Bluetooth-Schnittstelle ausgebildet. Bei einer nicht dargestellten Ausführungsform ist die Kommunikationseinheit einstückig mit dem Computer ausgeführt.

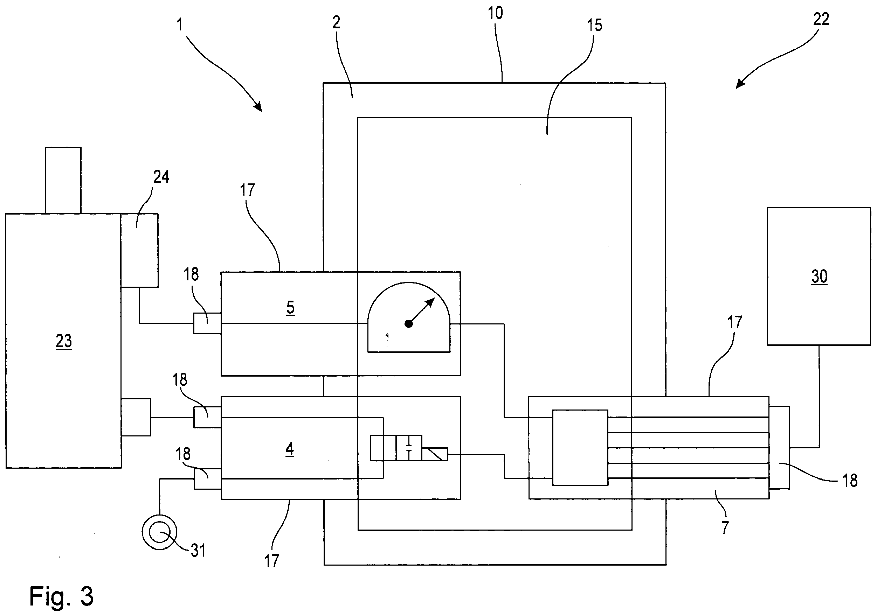

Jedes der Arbeitsmodule 4 bis 9 weist einen Fortsatz 21 auf, der dazu vorgesehen ist, den Randbereich am Computergehäuse 10 zu überbrücken, so dass ein unmittelbarer Bezug zwischen dem Arbeitsmodul 4 bis 9 und einer graphischen Darstellung auf dem Bildschirm 15 hergestellt werden kann, wie dies in der Figur 3 näher dargestellt ist.

Das in der Figur 3 dargestellte Automatisierungssystem 22 umfasst neben dem Automatisierungsgerät 1, das aus Gründen der Vereinfachung nur mit drei Arbeitsmodulen 4, 5 und 7 versehen ist, mehrere externe Komponenten. Exemplarisch sind die externen Komponenten als Fluidmotor 23, als Drehzahlsensor 24 und als Steuereinheit 30 ausgebildet. Das Arbeitsmodul 4 umfasst exemplarisch ein 2/2-Wege-Schaltventil 28 und wird in der Figur 5 näher dargestellt.

Gemäß der Figur 5 ist in dem Modulgehäuse 17 des Arbeitsmoduls 5 eine Verarbeitungseinheit 26 vorgesehen, die das 2/2-Wege-Schaltventil und einen Koppelbaustein 27 umfasst. Das 2/2-Wege-Schaltventil ist fluidisch mit den Anschlusseinrichtungen 18 verbunden, an denen Fluid-schläuche zur Verbindung mit dem Fluidmotor 23 und mit einer Fluidquelle 31 angeschlossen werden können. Der Koppelbaustein 27 umfasst exemplarisch einen nicht näher dargestellten Mikrocontroller sowie einen ebenfalls nicht näher dargestellten Verstärkerbaustein. Der Mikrocontroller dient zur Verarbeitung von Signalen, die von der Kommunikationseinheit 3 bereitgestellt werden, mit Hilfe des Verstärkerbausteins 27 werden entsprechende Signale in Ansteuersignale zur Ansteuerung der Magnetspule des 2/2-Wege-Schaltventils umgesetzt. Der Koppelbaustein 27 ist in nicht näher dargestellter Weise mit dem Stecker 19 verbunden, über den sowohl eine Ein- und/oder Auskopplung von elektrischen Signalen als auch von elektrischen Versorgungsspannungen erfolgen kann.

Das Arbeitsmodul 4 steht über die Steckverbindung aus Stecker 19 und Steckbuchse 20 in elektrisch leitender, drahtgebundener Signalübertragungsverbindung mit der Kommunikationseinheit 3, die ihrerseits über die Datenschnittstelle 12 in drahtloser Signalübertragungsverbindung mit der Recheneinheit 11 des Computers 2 steht. Eine Ansteuerung des im Arbeitsmodul 4 aufgenommenen 2/2-Wegeventils 28 erfolgt beispielsweise durch eine Steuereinheit 30, die über das Arbeitsmodul 7 mit der Kommunikationseinheit 3 und dem Computer 2 verbunden ist. Die exemplarisch als Busteilnehmer ausgebildete Steuereinheit 30 empfängt das Signal des mit dem Arbeitsmodul 5 verbundenen Drehzahlsensors 24 über ein nur schematisch dargestelltes, zwischen dem Arbeitsmodul 7 und der Steuereinheit 30 ausgebildetes Bussystem und verarbeitet dieses Signal, um eine Übereinstimmung der gemessenen Drehzahl mit einem vorgebbaren Drehzahlbereich für den Fluidmotor 23 zu überprüfen. Beim Vorliegen von Abweichungen, die einen vorgebbaren Schwellwert überschreiten, gibt die Steuereinheit 30 über das Bussystem ein Steuersignal an das Arbeitsmodul 7 aus. Dieses Steuersignal wird über die Kommunikationseinheit 3 und den Computer 2 an das Arbeitsmodul 4 weitergeleitet und führt zu einer Schaltbewegung des 2/2-Wege-Schaltventils 28, wodurch die Fluidzufuhr zum Fluidmotor 23 verändert werden kann.

Für einen Aufbau des in der Figur 3 exemplarisch dargestellten Automatisierungssystems 22 kann die folgende Vorgehensweise vorgesehen werden. Zunächst wird der Computer 2 auf die Kommunikationseinheit 3 aufgesetzt. Gegebenenfalls können hierzu nicht näher dargestellte Haltemittel vorgesehen sein, um einen festen Zusammenhalt von Computer 2 und Kommunikationseinheit 3 zu gewährleisten. Anschließend werden die Arbeitsmodule 4, 5 und 7 an die Kommunikationseinheit 3 angeschlossen, wobei jedes der Arbeitsmodule 4, 5 und 7 an einer beliebigen Arbeitsposition gegenüber dem Computer 2, also an einem frei wählbaren, eine Steckbuchse 20 aufweisenden Ort mit der Kommunikationseinheit 3 verbunden werden kann. Exemplarisch ermittelt die Kommunikationseinheit 3 die Informationen, die für den Computer notwendig sind, um die Signale für die jeweiligen Arbeitsmodule 4, 5 und 7 zu bearbeiten. Hierzu kommuniziert die Kommunikationseinheit 3 mit den Arbeitsmodulen 4, 5 und 7 und fragt dort die jeweilige Funktion und/oder Identifikation ab. In einem nachfolgenden Schritt stellt die Kommunikationseinheit 3 die ermittelten Informationen an den Computer 2 zur Verfügung, der entsprechend einem in der Recheneinheit 11 ablaufenden Programm einen Datensatz oder eine Bibliothek von Datensätzen für die Arbeitsmodule 4, 5 und 7 ermittelt und gegebenenfalls dem Benutzer zur Auswahl zur Verfügung stellt. Exemplarisch werden die Datensätze aus einer externen Datenbank ermittelt, die beispielsweise über eine drahtlose Internetverbindung zwischen dem Computer 2 und einem nicht dargestellten Internetzugangspunkt oder über ein lokales Netzwerk (LAN/WLAN) von einem lokalen Server abgefragt werden kann.

Sobald die Datensätze für die Arbeitsmodule 4, 5 und 7 in der Recheneinheit vorliegen und gegebenenfalls durch den Benutzer eine Auswahl eines geeigneten Datensatzes aus unterschiedlichen Datensätzen vorgenommen wurde, kann die Recheneinheit zu jedem der Arbeitsmodule 4, 5 und 7 in einem jeweils an das Arbeitsmodul 4, 5 und 7 angrenzenden Bildschirmbereich eine graphische Darstellung auf dem Bildschirm 15 vornehmen, die eine vom Datensatz, insbesondere vom ausgewählten Datensatz, abhängige Funktion und gegebenenfalls einen dementsprechenden Funktionszustand des jeweiligen Arbeitsmoduls 4, 5 und 7 repräsentiert. Ferner kann in dem jeweiligen Bild-schirmbereich auch angezeigt werden, in welcher Weise ein Bezug zwischen der dargestellten Funktionalität des jeweiligen Arbeitsmoduls 4, 5 und 7 und dem Arbeitsmodul 4, 5 und 7 besteht. Hierzu werden beispielsweise auf den Arbeitsmodulen 4, 5 und 7 aufgebrachte Funktionssymbole wie beispielsweise Leitungssymbole, die elektrische oder fluidische Leitungen repräsentieren, auf dem Bildschirm 15 weitergeführt. Vorzugsweise wird auf dem Bildschirm 15 die Funktion des jeweiligen Arbeitsmoduls 4 bis 9 dargestellt, exemplarisch beim Arbeitsmodul 4 die Ventilfunktion als 2/2-Wege-Schaltventil.

Ergänzend oder alternativ kann vorgesehen sein, dass auf dem jeweiligen Bildschirmabschnitt die Funktion der an das Arbeitsmodul 4 bis 9 angeschlossenen externen Komponente dargestellt wird. So wird exemplarisch für das Arbeitsmodul 5 die Funktion des Drehzahlsensors 24 auf dem Bildschirm 15 angezeigt. Hierzu kann es erforderlich sein, dem Computer 2 mitzuteilen, welche externe Komponente am Arbeitsmodul 5 angeschlossen ist. Beispielsweise kann der Datensatz für das Arbeitsmodul 5, den der Computer 2 anhand der Identifikation des Arbeitsmoduls 5 ermittelt, so gestaltet sein, dass das in der Recheneinheit 11 ablaufende Programm erkennt, dass eine zusätzliche Eingabe notwendig ist, um die korrekte graphische Darstellung für das Arbeitsmodul 5 auf dem Bildschirm 15 vornehmen zu können. Beispielsweise kann der Benutzer dazu aufgefordert werden, eine Typenkennung des Drehzahlsensors 24 ein-zugeben.

Sobald die jeweiligen Arbeitsmodule 4, 5 und 7 auf den jeweils zugeordneten Bildschirmbereichen repräsentiert werden, kann der Computer 2 den Benutzer zu einer Eingabe auffordern, um die gewünschten Verknüpfungen zwischen den Arbeitsmodulen 4, 5 und 7 herzustellen. Hierbei kann in Abhängigkeit vom gewählten didaktischen Konzept beispielsweise vorgesehen werden, dass nur technisch sinnvolle Verknüpfungen zwischen den Arbeitsmodulen 4, 5 und 7 hergestellt werden können. Die gewünschten Verknüpfungen kann der Bediener beispielsweise erstellen, indem er manuell auf der berührempfindlichen Bildschirmoberfläche einen Linienzug zwischen den zu verknüpfenden Arbeitsmodulen 4, 5 und 7 abfährt. Hierdurch stellt der Computer 2 entsprechend dem ablaufenden Programm eine Linie zwischen den Bildschirmbereichen der Arbeitsmodule 4, 5 und 7 auf dem Bildschirm 15 dar und führt auch eine logische Verknüpfung der Arbeitsmodule 4, 5 und 7 in der Recheneinheit 11 durch.

Exemplarisch wurden bei dem Automatisierungssystem gemäß der Figur 3 insgesamt zwei Verknüpfungen erstellt. Die erste Verknüpfung betrifft eine Signalübermittlung von dem Drehzahlsensor 24 zur Steuereinheit 30. Die zweite Verknüpfung betrifft eine Signalübermittlung von der Steuereinheit 30 zum 2/2-Wege-Schaltventil 28.

Abweichend von der Darstellung der Figur 3 können zusätzlich in die auf dem Bildschirm 15 dargestellten Signalpfade zwischen den Arbeitsmodulen 4, 5 und 7 noch virtuelle Komponenten eingefügt werden, dies kann beispielsweise bei Kopplung zweier Arbeitsmodule mit jeweils angeschlossenen fluidischen Komponenten eine Drossel, ein Ventil oder eine andere virtuelle fluidische Komponente sein.

Durch die Verwendung der Arbeitsmodule ist es möglich, handelsübliche elektrische und fluidische Komponenten an das Automatisierungsgerät 1 anzuschließen, wobei die Auswahl dieser Komponenten nur durch die Auslegung der jeweils zur Kopplung mit dem Computer 2 erforderlichen Arbeitsmodule beschränkt wird. Diese können aufgrund der modularen Gestaltung des Automatisierungsgeräts 1 leicht ausgetauscht werden.

Bei einer weiteren, nicht näher dargestellten Nutzungsweise für das Automatisierungsgerät wird zumindest an wenigstens ein Arbeitsmodul eine Steuerung, insbesondere eine speicherprogrammierbare Steuerung angeschlossen und die Steuersignale der Steuerung dienen als Eingangssignale für das jeweilige Arbeitsmodul. Auf dem Bildschirm des Computers kann dann beispielsweise ein virtueller Industrieroboter oder eine virtuelle verfahrenstechnische Anlage dargestellt werden, die von der Steuerung angesteuert werden soll, so dass nach entsprechender Programmierung der Steuerung gefahrlos die korrekte Funktion des Industrieroboters oder der Anlage am Bildschirm des Computers überprüft werden kann.

## Patentansprüche

1. Automatisierungsgerät für Ausbildungszwecke, mit einem Computer (2), der eine Recheneinheit (11), ein Computergehäuse (10), eine Datenschnittstelle (12) und einen Bildschirm (15) umfasst, wobei die Recheneinheit (11), die Datenschnittstelle (11) und der Bildschirm (15) im Computergehäuse (10) aufgenommen sind, mit wenigstens einem Arbeitsmodul (4, 5, 6, 7, 8, 9), das ein Modulgehäuse (17) umfasst, an dem eine Anschlusseinrichtung (18) für eine elektrische und/oder fluidische Kopplung mit einer externen Komponente (23, 24, 30) ausgebildet ist und in dem eine Verarbeitungseinheit (26) zur Verarbeitung von elektrischen Signalen des Computers (2) oder zur Verarbeitung von elektrischen Signalen des Computers (2) und der externen Komponente (23, 24, 30) aufgenommen ist, wobei das Arbeitsmodul (4, 5, 6, 7, 8, 9) für eine Signalkommunikation mit der Recheneinheit (11) über einen drahtlosen und/oder drahtgebundenen Signalpfad eingerichtet ist, der über die Datenschnittstelle (12) verläuft, wobei in den Signalpfad eine Kommunikationseinheit (3) eingeschleift ist, die für eine unidirektionale oder bidirektionale Umsetzung elektrischer Signale zwischen Arbeitsmodul (4, 5, 6, 7, 8, 9) und Computer (2) ausgebildet ist und die Steckbuchsen (20) für eine Anordnung der Arbeitsmodule (4, 5, 6, 7, 8, 9) an einer Arbeitsposition gegenüber dem Computer (2) aufweist, wobei die Recheneinheit (11) dazu eingerichtet ist, auf einem benachbart zur Arbeitsposition des Arbeitsmoduls (4, 5, 6, 7, 8, 9) angeordneten Bildschirmbereich eine dem Arbeitsmodul (4, 5, 6, 7, 8, 9) zugeordnete graphische Darstellung bereitzustellen und wobei das Arbeitsmodul (4, 5, 6, 7, 8, 9) für eine Anordnung an der zum Bildschirm (15) benachbarten Arbeitsposition ausgebildet ist.

2. Automatisierungsgerät nach Anspruch 1, **dadurch gekennzeichnet, dass** die Recheneinheit (11) dazu eingerichtet ist, anhand der dem Arbeitsmodul (4, 5, 6, 7, 8, 9) zugeordneten graphischen Darstellung auf dem Bildschirm (15) eine, insbesondere elektrische und/oder fluidische, Funktion des Arbeitsmoduls (4, 5, 6, 7, 8, 9) zu symbolisieren und /oder dass die Recheneinheit (11) dazu eingerichtet ist, in der dem Arbeitsmodul (4, 5, 6, 7, 8, 9) zugeordneten graphischen Darstellung auf dem Bildschirm (15) eine Information bereitzustellen, die von elektrischen Signalen des Computers (2) und/oder der externen Komponente (23, 24, 30) am Arbeitsmodul (4, 5, 6, 7, 8, 9) abhängt.

3. Automatisierungsgerät nach Anspruch 1 oder 2, **dadurch gekennzeichnet, dass** die Recheneinheit (11) für eine virtuelle elektrische und/oder virtuelle fluidische Verknüpfung mehrerer Arbeitsmodule (4, 5, 6, 7, 8, 9) eingerichtet ist.

4. Automatisierungsgerät nach Anspruch 1, **dadurch gekennzeichnet, dass** die Kommunikationseinheit (3) für eine mechanische Kopplung, insbesondere mittels einer magnetischen Kopplung und/oder einer mechanischen Steckverbindung, mit dem Arbeitsmodul (4, 5, 6, 7, 8, 9) ausgebildet ist.

5. Automatisierungsgerät nach Anspruch 4, **dadurch gekennzeichnet, dass** am Arbeitsmodul (4, 5, 6, 7, 8, 9) und an der Kommunikationseinheit (3) zueinander korrespondierende, insbesondere kontaktlose und/oder kontaktgebundene, elektrische Verbindungsmittel (19, 20) ausgebildet sind, die für eine Signalübertragung zwischen Arbeitsmodul (4, 5, 6, 7, 8, 9) und Kommunikationseinheit (3) eingerichtet sind.

6. Automatisierungsgerät nach Anspruch 4 oder 5, **dadurch gekennzeichnet, dass** der Computer (2) und/oder die Kommunikationseinheit (3) für eine Erkennung des angekoppelten Arbeitsmoduls (4, 5, 6, 7, 8, 9) und für eine Bereitstellung von spezifischen, dem erkannten Arbeitsmodul (4, 5, 6, 7, 8, 9) zugehörigen Daten aus einer internen oder externen Datenbank eingerichtet sind.

7. Automatisierungsgerät nach einem der vorhergehenden Ansprüche, **dadurch gekennzeichnet, dass** das Arbeitsmodul (4, 5, 6, 7, 8, 9) einen, insbesondere austauschbar ausgebildeten, zungenartigen Fortsatz (21) aufweist, der bei mechanischer Kopplung des Arbeitsmoduls (4, 5, 6, 7, 8, 9) mit dem Computer (2), insbesondere mittels der Kommunikationseinheit (3), einen um den Bildschirm (15) ausgebildeten Randbereich des Computergehäuses (10) überdeckt.

8. Automatisierungsgerät nach einem der vorhergehenden Ansprüche, **dadurch gekennzeichnet, dass** die Verarbeitungseinheit (26) eine elektrische Sensoreinrichtung und/oder eine fluidische Sensoreinrichtung und/oder eine elektrofluidische Stelleinrichtung und/oder eine elektrische Stelleinrichtung und/oder einen Busknoten umfasst.

9. Automatisierungsgerät nach einem der vorhergehenden Ansprüche, **dadurch gekennzeichnet, dass** die externe Komponente (23, 24, 30) als Sensor oder Aktor oder programmierbare Steuerung ausgebildet ist.

10. Automatisierungsgerät nach einem der vorhergehenden Ansprüche, **dadurch gekennzeichnet, dass** das Computergehäuse (10) mit dem integrierten Bildschirm (15) eine im Wesentlichen kubische Hüllgeometrie aufweist und/oder dass der Bildschirm (15) für eine manuelle Eingabe auf einer Bildschirmoberfläche berührempfindlich ausgebildet ist.

11. Verfahren zur Verwendung eines Automatisierungsgeräts nach einem der Ansprüche 1 bis 10, mit den Schritten: Anschließen der externen Komponenten (23, 24, 30) an Arbeitsmodule (4, 5, 6, 7, 8, 9), die zur Verarbeitung und/oder Bereitstellung von Signalen und/oder zur Beeinflussung von Fluidströmen von den externen Komponenten (23, 24, 30) und/oder an die externen Komponenten (23, 24, 30) ausgebildet sind, Verbinden der Arbeitsmodule (4, 5, 6, 7, 8, 9) mit einem Computer (2) unter Zwischenschaltung einer Kommunikationseinheit (3), wobei die Arbeitsmodule (4, 5, 6, 7, 8, 9) angrenzend an einem Bildschirm (15) des Computers (2) angeordnet werden, Durchführen einer Erkennung der mit dem Computer (2) verbundenen Arbeitsmodule (4, 5, 6, 7, 8, 9), Auslesen von Daten für graphische Darstellungen der Arbeitsmodule (4, 5, 6, 7, 8, 9) auf dem Bildschirm (15) aus einer internen oder externen Datenbank, Darstellen der graphischen Darstellungen der Arbeitsmodule (4, 5, 6, 7, 8, 9) in Bildschirmbereichen, die an die jeweiligen Arbeitsmodule (4, 5, 6, 7, 8, 9) angrenzen, Darstellen von Verknüpfungsmöglichkeiten für Verbindungen zwischen den verbundenen Arbeitsmodulen (4, 5, 6, 7, 8, 9).

12. Verfahren nach Anspruch 11, **dadurch gekennzeichnet, dass** der Computer Signalpfade zwischen Arbeitsmodulen (4, 5, 6, 7, 8, 9) gemäß einer automatisierten oder manuellen Verknüpfungsauswahl erzeugt, so dass ein Signalaustausch zwischen den virtuell funktional verknüpften Arbeitsmodulen (4, 5, 6, 7, 8, 9) mittels des Computers erfolgt, um ein Verhalten der Arbeitsmodule (4, 5, 6, 7, 8, 9) und der daran angeschlossenen externen Komponenten (23, 24, 30) zu erzeugen, das vorzugsweise einer unmittelbaren Kopplung der externen Komponenten (23, 24, 30) entspricht.

13. Computerprogrammprodukt zum virtuellen funktionalen Verknüpfen von externen Komponenten (23, 24, 30), wobei durch Ausführung des Computerprogrammprodukts von einer Recheneinheit (11) eines Computers (2) das Verfahren gemäß Anspruch 11 oder 12 durchgeführt wird.

## Claims

1. Automation unit for training purposes, with a computer (2), comprising an arithmetic and logic unit (11), a computer housing (10), a data interface (12) and a screen (15), wherein the arithmetic and logic unit (11), the data interface (12) and the screen (15) are accommodated in the computer housing (10), with at least one operating module (4, 5, 6, 7, 8, 9) which includes a module casing (17) on which is formed a connection device (18) for electrical and/or fluidic connection to an external component (23, 24, 30) and in which a processing unit (26) for the processing of electrical signals of the computer (2) or for the processing of electrical signals of the computer (2) and the external components (23, 24, 30) is accommodated, wherein the operating module (4, 5, 6, 7, 8, 9) is designed for signal communication with the arithmetic and logic unit (11) via a wireless and/or wired signal path which runs over the data interface (12), wherein a communication unit (3) is looped into the signal path and is designed for unidirectional or bidirectional conversion of electrical signals between the operating module (4, 5, 6, 7, 8, 9) and the computer (2) and which includes sockets (20) for a connection of the operating modules (4, 5, 7) in an operating position relative to the computer (2), wherein the arithmetic and logic unit (11) is so configured as to provide on a screen field adjacent to the working position of the operating module (4, 5, 6, 7, 8, 9) a graphical representation assigned to the operating module (4, 5, 6, 7, 8, 9) and wherein the operating module (4, 5, 6, 7, 8, 9) is designed for a placement in the operating position adjacent to the screen (15).

2. Automation unit according to claim 1, **characterised in that** the arithmetic and logic unit (11) is so configured, with the aid of the graphical representation assigned to the operating module (4, 5, 6, 7, 8, 9), as to symbolise on the screen (15) an electrical and/or fluidic function of the operating module (4, 5, 6, 7, 8, 9), and/or that the arithmetic and logic unit (11) is configured so as to provide, in the graphical representation on the screen (15) assigned to the operating module (4, 5, 6, 7, 8, 9), information which depends on electrical signals of the computer (2) and/or the external components (23, 24, 30) to the operating module (4, 5, 6, 7, 8, 9).

3. Automation unit according to claim 1 or 2, **characterised in that** the arithmetic and logic unit (11) is configured for a virtual electrical and/or virtual fluidic interlinking of several operating modules (4, 5, 6, 7, 8, 9).

4. Automation unit according to claim 1, **characterised in that** the communication unit (3) is designed for a mechanical connection, in particular by means of a magnetic coupling and/or a physical plug connection, with the operating module (4, 5, 6, 7, 8, 9).

5. Automation unit according to claim 4, **characterised in that** electrical connection means (19, 20), corresponding to one another, in particular non-contact and or requiring contact, are formed on the operating module (4, 5, 6, 7, 8, 9) and the communication unit (3), and are configured for signal transmission between operating module (4, 5, 6, 7, 8, 9) and communication unit (3).

6. Automation unit according to claim 4 or 5, **characterised in that** the computer (2) and/or the communication unit (3) are configured for recognition of the connected operating module (4, 5, 6, 7, 8, 9) and for provision of specific data associated with the recognised operating module (4, 5, 6, 7, 8, 9), from an internal or external database.

7. Automation unit according to any of the preceding claims, **characterised in that** the operating module (4, 5, 6, 7, 8, 9) has a, in particular interchangeable, tongue-like extension (21) which, on physical connection of the operating module (4, 5, 6, 7, 8, 9) to the computer (2), in particular by means of the communication unit (3), covers a boundary zone of the computer housing (10) formed around the screen (15).

8. Automation unit according to any of the preceding claims, **characterised in that** the processing unit (26) includes an electrical sensor unit and/or a fluidic sensor unit and/or an electro-fluidic control unit and/or an electrical control unit and/or a bus node.

9. Automation unit according to any of the preceding claims, **characterised in that** the external component (23, 24, 30) is in the form of a sensor or actuator or programmed controller.

10. Automation unit according to any of the preceding claims, **characterised in that** the computer housing (10) with the integral screen (15) has a substantially cubical envelope geometry and/or the screen (15) is touch-sensitive for manual input on a screen surface.

11. Method for the operation of an automation unit according to one of the claims 1 to 10 with the following steps: connection of the external components (23, 24, 30) to operating modules (4, 5, 6, 7, 8, 9) which are designed for the processing and/or provision of signals and/or for the influencing of fluid flows from the external components (23, 24, 30) and/or to the external components (23, 24, 30), connection of the operating modules (4, 5, 6, 7, 8, 9) to a computer (2) with interconnection of a communication unit (3), wherein the operating modules (4, 5, 6, 7, 8, 9) are arranged adjacent to a screen (15) of the computer (2), carrying out recognition of the operating modules (4, 5, 6, 7, 8, 9) connected to the computer (2), readout of data for a graphical representation of the operating modules (4, 5, 6, 7, 8, 9) on the screen (15) from an internal or external database, display of the graphical representations of the operating modules (4, 5, 6, 7, 8, 9) in screen fields adjacent to the respective operating modules (4, 5, 6, 7, 8, 9), display of interlinking options for connections between the connected operating modules (4, 5, 6, 7, 8, 9).

12. Method according to claim 11, **characterised in that** the computer generates signal paths between operating modules (4, 5, 6, 7, 8, 9) in accordance with an automated or manual interlinking selection, so that an exchange of signals between the virtual functional interlinked operating modules (4, 5, 6, 7, 8, 9) takes place, in order to generate a behaviour of the operating modules (4, 5, 6, 7, 8, 9) and the external components (23, 24, 30) connected to them which preferably corresponds to a direct connection of the external components (23, 24, 30).

13. Computer program product for the virtual functional interlinking of external components (23, 24, 30), wherein through the running of the computer program product by an arithmetic and logic unit (11) of a computer (2), the method according to claim 11 or 12 is implemented.

## Revendications

1. Appareil d'automatisation à des fins de réalisation, avec un ordinateur (2) qui comporte une unité de calcul (11), un boîtier d'ordinateur (10), une interface de données (12) et un écran (15), dans lequel l'unité de calcul (11), l'interface de données (11) et l'écran (15) sont reçus dans le boîtier d'ordinateur (10), avec au moins un module de travail (4, 5, 6, 7, 8, 9) qui comporte un boîtier de module (17), sur lequel un dispositif de raccordement (18) pour un couplage électrique et/ou fluidique avec un composant externe (23, 24, 30) est réalisé et dans lequel une unité de traitement (26) est reçue pour le traitement de signaux électriques de l'ordinateur (2) ou pour le traitement de signaux électriques de l'ordinateur (2) et des composants externes (23, 24, 30), dans lequel le module de travail (4, 5, 6, 7, 8, 9) est aménagé pour une communication de signal avec l'unité de calcul (11) par le biais d'une voie de signal sans fil et/ou filaire qui s'étend par le biais de l'interface de données (12), dans lequel une unité de communication (3) est insérée dans la voie de signal, laquelle est réalisée pour un transfert unidirectionnel ou bidirectionnel de signaux électriques entre le module de travail (4, 5, 6, 7, 8, 9) et l'ordinateur (2) et présente les fiches femelles (20) pour un agencement des modules de travail (4, 5, 6, 7, 8, 9) sur une position de travail par rapport à l'ordinateur (2), dans lequel l'unité de calcul (11) est aménagée afin de mettre à disposition sur une zone d'écran agencée de manière contiguë à la position de travail du module de travail (4, 5, 6, 7, 8, 9) une représentation graphique associée au module de travail (4, 5, 6, 7, 8, 9) et dans lequel le module de travail (4, 5, 6, 7, 8, 9) est réalisé pour un agencement sur la position de travail contiguë à l'écran (15).

2. Appareil d'automatisation selon la revendication 1, **caractérisé en ce que** l'unité de calcul (11) est aménagée afin de symboliser à l'aide de la représentation graphique associée au module de travail (4, 5, 6, 7, 8, 9) sur l'écran (15) une fonction, en particulier électrique et/ou fluidique, du module de travail (4, 5, 6, 7, 8, 9) et/ou que l'unité de calcul (11) est aménagée afin de mettre à disposition dans la représentation graphique associée au module de travail (4, 5, 6, 7, 8, 9) sur l'écran (15) des informations qui dépendent des signaux électriques de l'ordinateur (2) et/ou des composants externes (23, 24, 30) sur le module de travail (4, 5, 6, 7, 8, 9).

3. Appareil d'automatisation selon la revendication 1 ou 2, **caractérisé en ce que** l'unité de calcul (11) est aménagée pour une liaison fluidique virtuelle et/ou électrique virtuelle de plusieurs modules de travail (4, 5, 6, 7, 8, 9).

4. Appareil d'automatisation selon la revendication 1, **caractérisé en ce que** l'unité de communication (3) est réalisée pour un couplage mécanique, en particulier au moyen d'un couplage magnétique et/ou d'une connexion enfichable mécanique, avec le module de travail (4, 5, 6, 7, 8, 9).

5. Appareil d'automatisation selon la revendication 4, **caractérisé en ce que** des moyens de liaison (19, 20) électriques, avec contact et/ou sans contact en particulier correspondant l'un à l'autre sont réalisés sur le module de travail (4, 5, 6, 7, 8, 9) et sur l'unité de communication (3), lesquels sont aménagés pour une transmission de signal entre le module de travail (4, 5, 6, 7, 8, 9) et l'unité de communication (3).

6. Appareil d'automatisation selon la revendication 4 ou 5, **caractérisé en ce que** l'ordinateur (2) et/ou l'unité de communication (3) sont aménagés pour une reconnaissance du module de travail (4, 5, 6, 7, 8, 9) couplé et pour une mise à disposition de données spécifiques afférentes au module de travail (4, 5, 6, 7, 8, 9) reconnu d'une base de données interne ou externe.

7. Appareil d'automatisation selon l'une quelconque des revendications précédentes, **caractérisé en ce que** le module de travail (4, 5, 6, 7, 8, 9) présente un prolongement (21) de type languette, réalisé en particulier de manière interchangeable qui recouvre en cas de couplage mécanique du module de travail (4, 5, 6, 7, 8, 9) avec l'ordinateur (2), en particulier au moyen de l'unité de communication (3), une zone de bord réalisée autour de l'écran (15) du boîtier d'ordinateur (10).

8. Appareil d'automatisation selon l'une quelconque des revendications précédentes, **caractérisé en ce que** l'unité de traitement (26) comporte un dispositif de capteur électrique et/ou un dispositif de capteur fluidique et/ou un dispositif de réglage électrofluidique et/ou un dispositif de réglage électrique et/ou un noeud de bus.

9. Appareil d'automatisation selon l'une quelconque des revendications précédentes, **caractérisé en ce que** le composant externe (23, 24, 30) est réalisé en tant que capteur ou actionneur ou commande programmable.

10. Appareil d'automatisation selon l'une quelconque des revendications précédentes, **caractérisé en ce que** le boîtier d'ordinateur (10) présente avec l'écran (15) intégré une géométrie d'enveloppe sensiblement cubique et/ou que l'écran (15) est réalisé pour une saisie manuelle sur une surface d'écran de manière tactile.

11. Procédé d'utilisation d'un appareil d'automatisation selon l'une quelconque des revendications 1 à 10, avec les étapes : le raccordement des composants externes (23, 24, 30) au module de travail (4, 5, 6, 7, 8, 9) qui sont réalisés pour le traitement et/ou la mise à disposition de signaux et/ou pour l'influence de courants fluidiques des composants externes (23, 24, 30) et/ou sont réalisés sur les composants externes (23, 24 30), la liaison des modules de travail (4, 5, 6, 7, 8, 9) avec un ordinateur (2) en intercalant une unité de communication (3), dans lequel les modules de travail (4, 5, 6, 7, 8, 9) sont agencés de manière contigüe à un écran (15) de l'ordinateur (2), la réalisation d'une reconnaissance des modules de travail (4, 5, 6, 7, 8, 9) raccordés à l'ordinateur (2), la lecture de données pour des représentations graphiques des modules de travail (4, 5, 6, 7, 8, 9) sur l'écran (15) à partir d'une base de données interne ou externe, la représentation des représentations graphiques des modules de travail (4, 5, 6, 7, 8, 9) dans des zones d'écran qui sont contiguës aux modules de travail respectifs (4, 5, 6, 7, 8 ,9), la représentation de possibilités de liaison pour des liaisons entre les modules de travail reliés (4, 5, 6, 7, 8, 9).

12. Appareil d'automatisation selon la revendication 11, **caractérisé en ce que** l'ordinateur génère des voies de signal entre des modules de travail (4, 5, 6, 7, 8, 9) selon une sélection de liaison manuelle ou automatisée de sorte qu'un échange de signal entre les modules de travail (4, 5, 6, 7, 8, 9) reliés fonctionnellement virtuellement soit effectué au moyen de l'ordinateur afin de générer un comportement des modules de travail (4, 5, 6, 7, 8, 9) et des composants externes (23, 24, 30) raccordés à ceux-ci, qui correspond de préférence à un couplage direct des composants externes (23, 24, 30).

13. Produit de programme informatique pour la liaison fonctionnelle virtuelle de composants externes (23, 24, 30), dans lequel le procédé selon la revendication 11 ou 12 est réalisé par la réalisation du produit de programme informatique d'une unité de calcul (11) d'un ordinateur (2).
